# FASCICULE DE BREVET EUROPEEN

(11) **EP 3 134 348 B1**
(45) Date de publication et mention de la délivrance du brevet: **24.08.2022**
(21) Numéro de dépôt: 14729434.2
(22) Date de dépôt: 25.04.2014
(51) Int. Cl.: C02F 1/04, C02F 1/16, C02F 103/08

(54) **PROCEDE DE DESSALEMENT**
ENTSALTZUNGSVERFAHREN
DESALINATION METHOD

(43) Date de publication de la demande: 01.03.2017
(73) Titulaire: El Ayi, Alain, 75015 Paris (FR)
(72) Inventeur: El Ayi, Alain, 75015 Paris (FR)
(74) Mandataire: Cabinet Chaillot
(86) Numéro de dépôt international: PCT/IB2014/000632
(87) Numéro de publication internationale: WO 2015/162446

(56) Documents cités:
- WO-A1-98/16474
- WO-A1-2004/014802
- WO-A1-2005/007580
- WO-A1-2012/002923
- FR-A1- 2 754 530
- US-A- 5 064 505

## Description

Techniques antérieures : Les systèmes et procédés de dessalement de l'eau de mer sont bien connus car des milliers d'usines de dessalement les utilisent dans le monde entier. Les principaux systèmes et procédés utilisés sont les systèmes et procédés membranaires (essentiellement l'Osmose Inverse RO) et d'évaporation (essentiellement MSF : Flash Multi-Etages, et MED : Distillation Multi-Effets). D'autres techniques peuvent être associées ou non à ces deux systèmes et procédés, telles que les techniques électrique, chimique, de congélation ou les énergies renouvelables. Les avantages du système et procédé de la présente invention sont compatibles avec la plupart de ces méthodes, mais la présente invention est différente des systèmes et procédés existants.

Exposé de l'invention : Le procédé de la présente invention est caractérisé par la construction et l'utilisation d'un réservoir parfaitement étanche. Les murs, le plafond et les éventuels piliers de soutien de ce réservoir doivent avoir la solidité nécessaire pour supporter l'importante charge qui s'exerce sur eux. Il doit être situé au bord de la mer si c'est de l'eau de mer qui doit être dessalée. Le matériau de construction utilisé doit être compatible avec l'eau de mer. La surface de la base du réservoir dépend de la quantité d'eau dessalée à produire, et n'est limitée que par des contraintes de génie civil. Ce réservoir ne communique avec l'extérieur que de deux façons : 1) La première se fait à travers un dispositif situé sur le toit, qui permet de le remplir en totalité d'eau de mer et qui devra ensuite être fermé de façon à rendre le réservoir parfaitement étanche. 2) Il communique aussi avec la mer grâce à une ou plusieurs ouvertures situées au-dessous du niveau de la mer. Ces ouvertures doivent être hermétiquement fermées (grâce à un système de commande) au moment du remplissage du réservoir. Après le remplissage, on les ouvre progressivement, mettant l'eau de mer qui est à l'intérieur du réservoir en communication avec l'eau de la mer. Une des solutions simples pour mettre en communication l'eau de mer du réservoir et l'eau de la mer consiste à placer, lors de la construction, la base du réservoir à un niveau plus bas que le niveau de la mer, età mettre ces ouvertures sur la face du réservoir située du côté de la mer sous le niveau de la mer. La partie supérieure du réservoir se trouve au-dessus du niveau de la mer.

Il faut à présent définir la hauteur que doit avoir le plafond du réservoir au- dessus du niveau de la mer. L'exemple suivant permet de définir plus facilement cette hauteur. Un réservoir de ce type, dont la hauteur au-dessus du niveau de la mer est de 13 mètres, est rempli d'eau de mer et fermé hermétiquement. On ouvre ensuite progressivement la ou les ouvertures de communication entre l'eau de mer du réservoir et l'eau de la mer. Le niveau de l'eau dans le réservoir va baisser et se stabiliser à une hauteur h au-dessus du niveau de la mer. Considérons 3 points. Le premier A est situé dans la mer, au niveau de la surface de l'eau. Le deuxième point B est situé au même niveau que A, mais à l'intérieur du réservoir. Le troisième point C est situé au niveau de la surface de l'eau dans le réservoir. Le point A est à l'air libre, donc il est à la pression atmosphérique que nous appelons Pa par la suite. Comme l'eau de la mer à l'extérieur du réservoir et l'eau de mer dans le réservoir sont en communication, la pression au point B, qui est au même niveau que le point A, est égale à la pression atmosphérique. Etant donné que le réservoir était entièrement rempli au moment de la mise en communication de l'eau de mer du réservoir et de l'eau de la mer, la pression qui existe au niveau du point C est la pression due à la vapeur saturante à la température de l'eau de mer qui est dans le réservoir, et que nous appelons Pₛ par la suite. D'après le principe fondamental de l'hydrostatique, la différence de pression entre les points B et C est égale à Pₐ-Pₛ= p.g.h, p étant la masse volumique de l'eau de mer, h la différence de niveau entre les points C et B, et g l'accélération de la pesanteur à cet endroit (gravity accélération), qui est égale à 9,8 m.s⁻² environ. On en déduit que h = (Pₐ - Pₛ)/ρg et que sa valeur est de l'ordre de 9,5 à 10 mètres. Elle est évidemment indépendante des 13 m choisis pour l'exemple comme le montre la formule précédente. La hauteur du plafond du réservoir, au-dessus du niveau de la mer, doit être égale à cette hauteur h plus le complément de hauteur qui donne l'espace nécessaire pour traiter la vapeur d'eau produite dans le réservoir.

Il suffit d'utiliser ensuite les systèmes adéquats pour condenser cette vapeur afin d'obtenir de l'eau dessalée grâce à un système comparable au système de distillation par flash : la condensation de la vapeur d'eau crée une baisse de pression et l'évacuation de l'eau de la surface du réservoir vers la mer maintient la température de l'eau située à la surface du réservoir à la température de l'eau de la mer. On maintient ainsi le phénomène d'évaporation "flash". Le même résultat peut être obtenu en remplaçant l'opération de condensation par l'évacuation continuelle d'une partie de la vapeur située au-dessus de l'eau de mer du réservoir, l'évacuation de l'eau de la surface du réservoir restant inchangée. La vapeur évacuée sera ensuite condensée en dehors du réservoir pour obtenir l'eau dessalée. Le taux de condensation de la vapeur ou son taux d'évacuation crée un "non équilibre toléré". Il s'agit de réaliser un compromis entre la quantité d'eau à dessaler et sa qualité (il s'agit d'éviter l'entraînement de gouttelettes d'eau salée avec la vapeur d'eau distillée). Une tonne d'eau évacuée de la surface de l'eau du réservoir libère par degré de température perdue une quantité d'énergie E = m.Cₚ.Δt, m étant la masse d'eau évacuée, ici égale à 1000 kg. Cₚest la chaleur spécifique à pression constante de l'eau de mer évacuée ; elle est égale à environ 4,2 Kilojoules par kilogramme et par degré centigrade, et Δt est égal à la diminution de la température de l'eau évacuée, ici At est égal à 1° centigrade. Cette perte d'énergie dépend de la concentration en sel de l'eau de mer et de sa température, et elle est d'environ 4,2 millions de joules dans ce cas. La chaleur latente de vaporisation de l'eau à cette température étant égale à 2,4 millions de joules environ, les 4,2 millions de joules libèrent 1,75 kg de vapeur environ. Les valeurs exactes pour p, Cp et les chaleurs latentes de vaporisation, ... peuvent être soit calculées, soit tirées des tables publiées, en fonction de différents paramètres comme la température ou la concentration en sel de l'eau de mer disponible pour être traitée.

L'évacuation d'une tonne d'eau de surface du réservoir vers la mer ne demande que très peu d'énergie car son énergie potentielle se transforme en énergie de pression (celle que doit posséder l'eau en revenant à la pression atmosphérique). Il est seulement nécessaire de compenser l'énergie de frottement (due à la viscosité de l'eau) pendant son transfert, de son niveau à la surface du réservoir vers la mer.

Afin de limiter la présence de gouttelettes d'eau de mer qui pourraient être entraînées avec la vapeur d'eau, il faut limiter la vitesse avec laquelle la vapeur d'eau quitte la surface de l'eau du réservoir. Une valeur acceptable de cette vitesse est en général de quelques mètres par seconde. Ceci est obtenu en limitant la baisse de pression due à la condensation de la vapeur d'eau du réservoir. L'installation d'un grillage métallique (Demister) retient les gouttelettes d'eau salée qui peuvent être entraînées quand même avec la vapeur. Par ailleurs, l'augmentation de la concentration en sel de l'eau évacuée du réservoir vers la mer est très faible comparée à ce qu'elle et dans les autres systèmes et procédés de dessalement. La présente méthode de dessalement est très écologique.

La quantité d'eau traitée dans un réservoir peut être augmentée en ajoutant un ou plusieurs bassins superposés, de faible hauteur (40 cm environ), à l'intérieur du réservoir, au-dessus de la surface de l'eau du réservoir et parallèlement à cette surface. L'eau de mer de l'intérieur du réservoir, qui est à la température de l'eau de la mer, est pompée vers ces bassins. Un système de condensation dans chaque bassin condense la vapeur d'eau. L'eau de ces bassins est évacuée en continu vers la mer. Cet empilement de bassins augmente la quantité d'eau dessalée proportionnellement au nombre d'étages pour une même surface au sol du réservoir. La vapeur d'eau peut aussi être évacuée comme dans le cas précédent.

Un second réservoir, qui fonctionne de la même façon que le premier réservoir, peut aussi être ajouté. Ce second réservoir est alimenté par de l'eau de mer ramenée grâce à des pompes et des tuyaux de taille suffisante de l'intérieur de la mer. Le point de prise d'eau à l'intérieur de la mer se trouve à une profondeur Z au- dessous du niveau de la mer. Plus la profondeur du point de la prise d'eau est grande, plus la température de l'eau de mer est froide et plus la pression est élevée. Ramener l'eau dans le réservoir ne requiert pas beaucoup d'énergie car l'énergie de pression qui diminue quand la profondeur diminue se transforme en énergie potentielle. L'énergie dépensée par les pompes servira à compenser l'énergie perdue par frottement dans les tuyaux à cause de la viscosité de l'eau.

On dispose ainsi de 2 réservoirs : le premier réservoir, dans lequel la température est celle de l'eau de la mer située à côté du réservoir et qui l'alimente, et le deuxième réservoir, dans lequel l'eau se trouve à une température inférieure. On peut choisir cette température en fixant la profondeur Z du point de prise d'eau. Dans ce cas, c'est l'eau froide du deuxième réservoir qui est utilisée pour condenser la vapeur d'eau du premier réservoir. Ceci peut se faire de plusieurs façons. On fait communiquer les 2 réservoirs par des tuyaux étanches qui vont servir à la condensation selon des schémas comparables à ceux utilisés par la distillation MSF ou MED. Par exemple, si on injecte de l'eau froide dans les tuyaux qui sont disposés dans l'espace où se trouve la vapeur d'eau du premier réservoir, une partie de la vapeur se condense et on peut canaliser l'eau ainsi condensée vers les réservoirs destinés à la recueillir. On évacue vers la mer l'eau froide provenant du deuxième réservoir et dont la température a augmenté pendant cette opération.

Le niveau de la mer en face des ouvertures de communication du réservoir avec la mer peut être stabilisé si d'importantes fluctuations de ce niveau perturbaient les opérations de dessalement. Il faut ajouter pour cela dans la mer, en face des ouvertures de communication entre le réservoir et la mer, des murs d'enceintes fermées. On peut ajouter, éventuellement installé dans les murs d'enceintes, un système de traitement de l'eau de mer qui entre dans ces enceintes et qui alimente ensuite le ou les réservoirs.

Le coût d'investissement et le coût de fonctionnement du dessalement de l'eau de mer en utilisant la présente invention sont nettement inférieurs à tous les autres procédés utilisés. Il n'y a pratiquement pas de maintenance dans une telle installation, mais quand elle est nécessaire, elle doit se faire grâce à des hommes grenouilles pour ne pas interrompre l'exploitation et surtout ne pas vider et remplir à nouveau les réservoirs.

## Revendications

1. Procédé de dessalement de l'eau de mer, comprenant :
- la fourniture d'un réservoir étanche configuré pour être situé au bord de la mer, comprenant un dispositif de remplissage sur le toit et une ou plusieurs ouvertures de communication configurées pour être situées au-dessous du niveau de la mer et communiquant avec la mer ;
- le remplissage en totalité du réservoir avec de l'eau de mer par ledit dispositif de remplissage, lesdites ouvertures de communication étant hermétiquement fermées, suivi de la fermeture dudit dispositif de remplissage pour rendre le réservoir étanche ;
- l'ouverture progressive desdites ouvertures de communication pour mettre en communication l'eau contenue dans le réservoir et l'eau de la mer, le niveau de l'eau dans le réservoir baissant et se stabilisant à une hauteur h au-dessus du niveau de la mer, la hauteur h étant définie par (Pa-Ps)/(pg), Pa représentant la pression atmosphérique, Ps représentant la pression due à la vapeur saturante à la température de l'eau de mer qui est dans le réservoir, p représentant la masse volumique de l'eau, g l'accélération de la pesanteur, de la vapeur d'eau étant produite dans le réservoir au-dessus de la hauteur h et le réservoir ayant une hauteur de plafond au-dessus du niveau de mer égale à la hauteur h plus le complément de hauteur qui donne l'espace nécessaire pour traiter la vapeur d'eau produite dans le réservoir ;
- la condensation de la vapeur d'eau produite, afin d'obtenir de l'eau dessalée ; et
- l'entretien d'un phénomène d'évaporation dit « flash » dans le réservoir par condensation de la vapeur d'eau produite et évacuation de l'eau de la surface du réservoir vers la mer, la hauteur h de l'eau dans le réservoir étant maintenue par les ouvertures de communication qui mettent en contact l'eau de mer à l'intérieur du réservoir avec l'eau de la mer après la phase de remplissage.

2. Procédé selon la revendication 1, dans lequel la base du réservoir est située sous le niveau de la mer, les ouvertures de communication étant disposées sur la face du réservoir située du côté de la mer, sous le niveau de la mer.

3. Procédé selon la revendication 1 ou 2, dans lequel une partie de la vapeur d'eau est continuellement évacuée du réservoir avant d'être condensée en dehors du réservoir, et des goutelettes d'eau salée entraînées avec la vapeur étant facultativement retenues par un grillage métallique de retenue.

4. Procédé selon l'une des revendications 1 à 3, dans lequel un ou plusieurs bassins superposés sont prévus à l'intérieur du réservoir, au-dessus de la surface de l'eau et parallèlement à celle-ci, l'eau de mer de l'intérieur du réservoir étant pompée vers ces bassins et l'eau des bassins étant évacuée en continu vers la mer, la vapeur d'eau étant condensée dans chaque bassin.

5. Procédé selon l'une des revendications 1 à 4, dans lequel ledit réservoir est un premier réservoir, le procédé comprenant également :
- l'alimentation d'un second réservoir, fonctionnant de la même façon que le premier réservoir, en eau de mer, au moyen de pompes et tuyaux, à partir d'un point de prise d'eau dans la mer situé à une profondeur Z au-dessous du niveau de la mer, la température de l'eau dans le second réservoir étant inférieure à la température de l'eau dans le premier réservoir, l'eau du second réservoir étant utilisée pour condenser la vapeur d'eau du premier réservoir, et l'eau provenant du second réservoir et dont la température a augmenté pendant la condensation étant évacuée vers la mer ;
et de préférence dans lequel l'eau du second réservoir est injectée dans des tuyaux disposés dans l'espace où se trouve la vapeur d'eau du premier réservoir, pour condenser une partie de la vapeur d'eau et canaliser l'eau condensée vers des réservoirs destinés à la recueillir.

6. Procédé selon l'une des revendications 1 à 5, dans lequel le niveau de la mer en face des ouvertures de communication du réservoir est stabilisé au moyen de murs d'enceintes fermées, un système de traitement étant de préférence prévu, de manière plus particulièrement préférée dans les murs d'enceintes, pour traiter l'eau de mer qui entre dans les enceintes et alimente le réservoir.

7. Procédé selon l'une des revendications 1 à 6, comprenant le recyclage d'énergie provenant d'autres usines, l'injection de chaleur dans le réservoir grâce à des tubes qui le traversent, et optionnellement la distillation de l'eau du réservoir réchauffée grâce à un système de bassins successifs munis de condensateurs.

8. Procédé selon l'une des revendications 1 à 7, comprenant également un dessalement par une autre technique telle que l'évaporation flash multi-étages ou la distillation multi-effets.

## Patentansprüche

1. - Verfahren zur Entsalzung von Meerwasser, umfassend:
- das Bereitstellen eines dichten Behälters, der ausgelegt ist, um sich am Rand des Meeres zu befinden, umfassend eine Füllvorrichtung auf dem Dach und eine oder mehrere Kommunikationsöffnungen, die ausgelegt sind, um sich unterhalb des Meeresspiegels zu befinden und die mit dem Meer kommunizieren;
- das vollständige Befüllen des Behälters mit Meerwasser durch die Füllvorrichtung, wobei die Kommunikationsöffnungen hermetisch geschlossen sind, gefolgt von dem Schließen der Füllvorrichtung, um den Behälter abzudichten;
- das schrittweise Öffnen der Kommunikationsöffnungen, um das in dem Behälter enthaltene Wasser und das Meerwasser in Kommunikation zu versetzen, wobei der Wasserspiegel in dem Behälter sinkt und sich in einer Höhe h oberhalb des Meeresspiegels stabilisiert, wobei die Höhe h durch (Pa-Ps)/(pg) definiert ist, wobei Pa den atmosphärischen Druck darstellt, Ps den Druck aufgrund des Sättigungsdampfes bei Temperatur des Meerwassers, das sich in dem Behälter befindet, darstellt, p die Dichte des Wassers, g die Fallbeschleunigung darstellt, wobei Wasserdampf in dem Behälter oberhalb der Höhe h erzeugt wird und der Behälter eine Deckenhöhe oberhalb des Meeresspiegels hat, der gleich der Höhe h ist plus der Höhenzugabe, die den zur Verarbeitung des im Behälter erzeugten Wasserdampfs notwendigen Raum bereitstellt;
- das Kondensieren des erzeugten Wasserdampfs, um entsalztes Wasser zu erhalten, und
- das Unterhalten eines so genannten "Flash"-Verdampfungsphänomens im Behälter durch Kondensation des erzeugten Wasserdampfs und Ableitung des Wassers von der Oberfläche des Behälters in Richtung Meer, wobei die Höhe h des Wassers im Behälter durch die Kommunikationsöffnungen beibehalten wird, die das Meerwasser im Inneren des Behälters mit dem Meerwasser nach der Füllphase in Kontakt versetzen.

2. - Verfahren nach Anspruch 1, wobei sich die Basis des Behälters unter dem Meeresspiegel befindet, wobei die Kommunikationsöffnungen auf der Fläche des Behälters angeordnet sind, die sich meerseitig unter dem Meeresspiegel befindet.

3. - Verfahren nach Anspruch 1 oder 2, wobei ein Teil des Wasserdampfs kontinuierlich aus dem Behälter abgeleitet wird, bevor die Kondensation außerhalb des Behälters erfolgt, und mit dem Dampf mitgeführte Salzwassertröpfchen fakultativ von einem metallischen Rückhaltegitter zurückgehalten werden.

4. - Verfahren nach einem der Ansprüche 1 bis 3, wobei ein oder mehrere übereinanderliegende Becken im Inneren des Behälters oberhalb der Wasseroberfläche und parallel zu dieser vorgesehen sind, wobei das Meerwasser vom Inneren des Behälters in Richtung dieser Becken gepumpt wird und das Wasser aus den Becken kontinuierlich in Richtung Meer abgeleitet wird, wobei der Wasserdampf in jedem Becken kondensiert ist.

5. - Verfahren nach einem der Ansprüche 1 bis 4, wobei der Behälter ein erster Behälter ist, wobei das Verfahren ebenfalls umfasst:
- das Versorgen eines zweiten Behälters, der wie der erst Behälter arbeitet, mit Meerwasser mit Hilfe von Pumpen und Rohren ab einem Wasserentnahmepunkt im Meer, der sich in einer Tiefe Z unterhalb des Meeresspiegels befindet, wobei die Temperatur des Wassers im zweiten Behälter unter der Temperatur des Wassers im ersten Behälter liegt, wobei das Wasser des zweiten Behälters verwendet wird, um den Wasserdampf des ersten Behälters zu kondensieren, und das Wasser, das vom zweiten Behälter kommt und dessen Temperatur während der Kondensation gestiegen ist, in Richtung Meer abgeleitet wird;
und vorzugsweise wobei das Wasser aus dem zweiten Behälter in Rohre eingeleitet wird, die in dem Raum angeordnet sind, wo sich der Wasserdampf des ersten Behälters befindet, um einen Teil des Wasserdampfs zu kondensieren und das kondensierte Wasser in Richtung der Behälter zu kanalisieren, die bestimmt sind, es aufzufangen.

6. - Verfahren nach einem der Ansprüche 1 bis 5, wobei der Meeresspiegel gegenüber den Kommunikationsöffnungen des Behälters mit Hilfe von Wänden geschlossener Kammern stabilisiert wird, wobei ein Behandlungssystem vorzugsweise, bevorzugterweise in den Wänden von Kammern vorgesehen ist, um das Meerwasser zu behandeln, das in die Kammern eintritt und den Behälter versorgt.

7. - Verfahren nach einem der Ansprüche 1 bis 6, umfassend das Recycling von Energie, die von anderen Werken kommt, das Einleiten von Wärme in den Behälter mit Röhren, die ihn durchqueren und optional die Destillation des mit einem System aufeinanderfolgender Becken, die mit Kondensatoren ausgestattet sind, erwärmten Wassers aus dem Behälter.

8. - Verfahren nach einem der Ansprüche 1 bis 7, umfassend ebenfalls eine Entsalzung durch eine andere Technik wie zum Beispiel die mehrstufige Flash-Verdampfung oder die Multieffekt-Destillation.

## Claims

1. - A method of desalinating sea water, comprising:
- providing a sealed reservoir configured to be located at the seaside, comprising a filling device on the roof and one or more communication openings configured to be located below sea level and communicating with the sea;
- filling the entire reservoir with seawater through said filling device, said communication openings being sealed, followed by closing said filling device to seal the reservoir;
- progressively opening said communication openings to communicate the water in the reservoir with the sea water, the level of the water in the reservoir dropping and stabilising at a height h above sea level, the height h being defined by (Pa-Ps)/(pg), Pa representing atmospheric pressure, Ps representing the pressure due to the saturating vapour at the temperature of the sea water in the reservoir, ρ representing the mass density of water, g is the acceleration of gravity, water vapour being produced in the reservoir above the height h and the reservoir has a headroom above sea level equal to the height h plus the additional height which gives the space required to handle the water vapour produced in the reservoir;
- condensing the water vapour produced, to obtain desalinated water; and
- maintaining a so-called "flash" evaporation phenomenon in the reservoir by condensation of the water vapour produced and evacuation of the water from the surface of the reservoir to the sea, the height h of the water in the reservoir being maintained by the communication openings which bring the sea water inside the reservoir into contact with the water of the sea after the filling phase.

2. - The method according to claim 1, wherein the base of the reservoir is located below sea level, the communication openings being arranged on the sea side face of the reservoir, below sea level.

3. - The method according to claim 1 or 2, wherein part of the water vapour is continuously discharged from the reservoir before being condensed out of the reservoir, and salt water droplets driven with the vapour being optionally retained by a retaining wire mesh.

4. - The method according to any of claims 1 to 3, wherein one or more superimposed basins are provided within the reservoir, above the water surface and parallel thereto, sea water from within the reservoir being pumped to these basins and water from the basins being continuously discharged to the sea, with the water vapour being condensed in each basin.

5. - The method according to any of claims 1 to 4, wherein said reservoir is a first reservoir, the method further comprising:
- supplying a second reservoir, operating in the same way as the first reservoir, with sea water, by means of pumps and pipes, from a water intake point in the sea located at a depth Z below sea level, the temperature of the water in the second reservoir being lower than the temperature of the water in the first reservoir, the water in the second reservoir being used to condense the water vapour in the first reservoir, and the water from the second reservoir whose temperature has increased during condensation being discharged to the sea ;
and preferably in which the water from the second reservoir is injected into pipes arranged in the space where the water vapour from the first reservoir is located, to condense part of the water vapour and to channel the condensed water to reservoirs intended for its collection.

6. - The method according to any of claims 1-5, wherein the sea level in front of the communication openings of the reservoir is stabilized by means of closed enclosure walls, a treatment system being preferably provided, more preferably within the enclosure walls, for treating the sea water entering the enclosures and feeding the reservoir.

7. - The method according to any of claims 1 to 6, comprising recycling energy from other plants, injecting heat into the reservoir by means of tubes passing through it, and optionally distilling the heated reservoir water by means of a system of successive basins provided with condensers.

8. - The method according to any of claims 1 to 7, also comprising desalination by another technique such as multi-stage flash evaporation or multi-effect distillation.
